# EUROPÄISCHE PATENTSCHRIFT

(11) **EP 0 840 910 B1**
(45) Veröffentlichungstag und Bekanntmachung des Hinweises auf die Patenterteilung: **24.03.1999**
(21) Anmeldenummer: 96927565.0
(22) Anmeldetag: 20.07.1996
(51) Int. Cl.: G05B 19/409, G05B 19/425, B25J 13/02

(54) **PROGRAMMIERGERÄT**
PROGRAMMING DEVICE
APPAREIL DE PROGRAMMATION

(30) Priorität: 22.07.1995 DE 29511862 U; 22.07.1995 DE 29511863 U; 22.07.1995 DE 29511864 U
(43) Veröffentlichungstag der Anmeldung: 13.05.1998
(73) Patentinhaber: KUKA Roboter GmbH, 86165 Augsburg (DE)
(72) Erfinder: WÖRN, Heinz, D-86316 Derching (DE); HAJDU, Erwin, D-86169 Augsburg (DE)
(74) Vertreter: Dipl.-Ing. Heiner Lichti Dipl.-Phys. Dr.rer.nat. Jost Lempert Dipl.-Ing. Hartmut Lasch
(86) Internationale Anmeldenummer: EP9603211
(87) Internationale Veröffentlichungsnummer: WO9704369

(56) Entgegenhaltungen:
- EP-A- 0 303 708
- EP-A- 0 310 958
- GB-A- 2 204 426
- US-A- 4 888 708
- US-A- 5 063 376
- US-A- 5 267 181
- US-A- 5 432 510

## Beschreibung

Die Erfindung betrifft ein Programmiergerät für Manipulatoren, insbesondere für mehrachsige Industrieroboter, mit den Merkmalen im Oberbegriff des Hauptanspruches.

Ein solches Programmiergerät für beidhändiges Halten und Bedienen ist aus der EP-A-0 310 958 bekannt. Es besteht aus einem schmalen kastenförmigen Gehäuse, das eine Bildschirm-Anzeige, an beiden Seiten einen ergonomischen Griffbereich und mehrere Schalter sowie Funktionstasten in Fingergreifnähe zu den Griffbereichen hat. Für die linke Hand ist zur Sicherung ein Handriemen oder Bügel vorhanden. Das Gerät kann nur auf eine Weise gehalten werden, was auf die Dauer ermüdend ist. Es hat außerdem keinen Joystick.

Ein anderes Programmiergerät zeigt die DE-U-88 06 214. Es ist ebenfalls nur für eine Handhaltung vorgesehen und weist an der Unterseite zwei von unten faßbare Griffe mit Schalttasten auf. Das Programmiergerät wird auf dem Unterarm liegend gehalten, wobei die eine Hand einen der Griffe faßt. Mit der anderen Hand können die auf der Tableauoberfläche befindlichen Schalter oder Tasten betätigt werden. Die Schalter und Funktionstasten sind schlecht zugänglich und können ohne Umgreifen nicht erreicht werden. Die Haltung ist ebenfalls ermüdend, so daß auch dieses Programmiergerät für längere Programmiersitzungen, wie sie beim Teaching eines Industrieroboters häufig erforderlich sind, ergonomisch ungünstig ist. Außerdem ist kein Joystick vorgesehen.

Aus Asea Journal 1982, Vol. 55, Nr.6, S. 145-150 "Man/machine communication in Asea's new robot controller" und der parallelen US-A-4,888,708 ist ein ähnliches Programmiergerät bekannt, das ebenfalls auf dem linken Unterarm abgestützt wird, wobei der Griff sich an einem seitlichen Gehäuseansatz an der rechten hinteren Ecke befindet. Das Gehäuse hat ansonsten keine definierten und ergonomisch ausgeformten Griffbereiche. Die Handhabung bringt die gleichen Nachteile wie der vorgenannte Stand der Technik mit sich. Das bekannte Programmiergerät besitzt an der rechten Seite einen mehrachsig beweglichen, aufrecht stehenden Joystick. Davor befindet sich ein ebenfalls weit vorragender eckiger Gehäuseansatz mit einem Ballenschalter, an dem der Ballen zwar abgestützt werden kann, der aber keine Griff- und Haltemöglichkeit für das Gerät bietet. Das Programmiergerät kann nur mit der linken Hand gehalten werden. Der Programmierer kann lediglich mit der rechten Hand das Gerät bedienen, wobei er entweder den Joystick oder die Tasten betätigt und dazu umgreifen muß. Diese Anordnung ist nicht ergonomisch.

Die JP-A-3-3787 zeigt ein anderes Programmiergerät mit einem seitlichen Joystick, der aus einer liegenden Ruhestellung in eine aufrecht stehende Arbeitsposition schwenkbar ist. Hier besteht keine Handabstützung, was das Gerät besonders unergonomisch macht.

Die US-A-5,267,181 und die US-A-5,432,510 zeigt Datenmanagementgeräte für Einhandbedienung mit einem ergonomisch ausgeformten Griffbereich an dem auch verschiedene Tasten angeordnet sind. Diese Geräte können nur auf eine Art und Weise gehalten werden. Als Programmiergerät für Mianipulatoren sind sie wegen ihres eingeschränkten Funktions- und Bedienungsumfangs nicht geeignet.

Die bekannten Programmiergeräte sind über eine mehradrige elektrische Leitung mit dem Schaltschrank des Manipulators verbunden und haben sonst keine Kommunikationsmöglichkeiten. Der Bediener ist in der Programmierung dadurch eingeschränkt. Zusätzliche Programmiermaßnahmen müssen im Schaltschrank vorgenommen werden, was häufig längere Wege erfordert. Die Handhabung ist dadurch unpraktisch und zeitaufwendig.

Es ist Aufgabe der vorliegenden Erfindung, ein ergonomisch besseres Programmiergerät aufzuzeigen.

Die Erfindung löst diese Aufgabe mit den Merkmalen im Hauptanspruch.
Das erfindungsgemäße Programmiergerät ist für beidhändiges Halten und Bedienen konzipiert und verfügt über drei oder mehr, vorzugsweise vier ergonomisch ausgeformte Griffbereiche mit Schaltern und/oder Funktionstasten in Fingergreifnähe. Durch diese verschiedenen
Greifmöglichkeiten kann der Bediener das Programmiergerät auf zwei oder mehr unterschiedliche Arten vorzugsweise im Querformat halten und die Handhaltung öfter wechseln, was Ermüdungserscheinungen wirksam vorbeugt. Außerdem begünstigen die ergonomisch ausgeformten Griffbereiche eine ermüdungsarme Handhaltung.

Die Griffbereiche können unterschiedlich ausgebildet sein. In der bevorzugten Ausführungsform sind an den
Gehäuserändern mindestens zwei, vorzugsweise drei Griffleisten angeformt, die eine besonders günstige ergonomische Formgebung haben. Den Griffleisten sind dabei auch zumindest ein Teil der Funktionstasten in
Fingergreifnähe zugeordnet, so daß die Tasten bequem betätigt werden können, ohne daß der Bediener die Handhaltung wechseln oder gar seine Hand vom Tableau lösen muß. In ergonomisch besonders günstiger Weise sind die Funktionstasten an der Gehäuseoberseite angeordnet und mit dem Daumen erreichbar.

An der Gehäuseunterseite befinden sich in der Nähe der Griffleisten und in griffgünstiger Lage jeweils ein oder mehrere Schalttasten, die beispielsweise als
Zustimmungstaste und/oder Start/Stop-Taste ausgebildet sind. Dabei ist es ferner günstig, wenn die Schalttasten und die Funktionstasten mehrfach vorhanden sind, so daß die verschiedenen vorgesehenen Funktionen aus allen Griffstellungen heraus durchführbar sind.

An der Geräteoberseite, vorzugsweise einem Gehäuseansatz, können zusätzliche Geräteschalter, Schlüsselschalter, Notschalter etc. angeordnet sein. Diese Schalter stellen Fernbedienungselemente des Roboters dar, die eine ständige Programmierung fernab von der Robotersteuerung erlauben. Der Bediener braucht daher auch zum Abschalten von Antrieben, zur Einstellung von Betriebsarten etc. nicht mehr wie bisher üblich zum Roboter bzw. zur Steuerung zu gehen.

In ergonomisch besonders günstiger Weise ist an mindestens einer Griffleiste eine vorstehende Ballenauflage vorhanden. Wenn ein mehrachsig bewegliches Steuerorgan eingesetzt wird, empfiehlt es sich, dieses in der Nähe der Griffleiste und der Ballenauflage anzuordnen. Dadurch kann das Steuerorgan bequem von der Griffleiste aus erreicht und betätigt werden, ohne daß der Bediener umgreifen muß. Die Hand findet eine Abstützung, was die Genauigkeit und Feinfühligkeit beim Bedienen verbessert. Zudem kann mit der vorzugsweise rechten Hand das Gerät zugleich gehalten und das Steuerorgan betätigt werden. Vorteilhaft ist außerdem, daß bei dieser Handhaltung auch die Funktionstasten im Daumenbereich liegen und betätigt werden können, ohne daß die Hand vom Steuerorgan oder der Griffleiste genommen werden muß.

Das mehrachsig bewegliche Steuerorgan ist z.B. als mindestens dreiachsiger, vorzugsweise sechsachsiger Joystick ausgebildet. Damit können alle Achsbewegungen eines üblicherweise sechsachsigen Industrieroboters von einem Steuerorgan aus ferngesteuert werden. Die Achsbewegungen können dabei komplex und überschliffen sein. Die ergonomische Gestaltung erlaubt es auch, das Steuerorgan unterschiedlich zu nutzen, z.B. als Maus oder als Lauf- bzw. Stellregler bzw. -taste für die Einstellung von Parametern.

Außer den an den Gehäuserändern angeordneten Griffleisten empfiehlt es sich auch, an der Gehäuseunterseite einen Griffzapfen anzuordnen. Vorteilhafterweise sind zwei Zapfen vorhanden, die mit entsprechend abgeschrägten Fußflächen als Tischaufsteller fungieren. Das Programmiergerät kann dadurch auch in ergonomisch vorteilhafter Schräglage auf einem festen Untergrund plaziert und bedient werden.

Das erfindungsgemäße Programmiergerät verfügt ferner über ausgedehnte Kommunikationsmöglichkeiten. Es hat ein oder mehrere Schnittstellen zur Verbindung mit externen Ein-oder Ausgabegeräten, z.B. Tastaturen oder Bildschirmen und/oder externen Recheneinheiten. Letzteres können z.B. Laptops für Programmierzwecke etc. sein. Die Schnittstellen befinden sich vorzugsweise versenkt am vorderen oder hinteren Gehäuserand unterhalb der Griffleiste.

Die Schnittstellen haben vorzugsweise elektrische Kontakte, können aber auch Anschlußmöglichkeiten für andere, z.B. optische Übertragungsmittel, wie Lichtleitkabel etc. haben. Sie erlauben ferner eine drahtlose Datenfernübertragung beim Anschluß geeigneter Sender/Empfänger mit Funk, Infrarot oder sonstiger Übertragung.

Die Schnittstellen können unterschiedlich ausgebildet sein und Kabelstecker, Schnittstellenkarten oder sonstige geeignete Kommunikationsmittel aufnehmen. Ein günstiger Platz ist die Unterseite bzw. der vordere und/oder hintere Gehäuserand. In diesem Bereich ist vorzugsweise auch der Auslaß für das Verbindungskabel zum Manipulator bzw. zu dessen Steuerung, sofern hierauf nicht aufgrund der drahtlosen Datenfernübertragung verzichtet werden kann. Die Gestaltung erlaubt eine weitgehend störungsfreie und ergonomische Handhabung und Bedienung des Programmiergeräts. Außerdem sind die Schnittstellen und Kabel an diesen Stellen wenig mechanisch belastet.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen
- Fig. 1: das Programmiergerät in Draufsicht,
- Fig. 2: eine Seitenansicht des Programmiergeräts entsprechend Pfeil II von Fig. 1,
- Fig. 3: eine Stirnansicht des Programmiergeräts gemäß Pfeil III von Fig. 1 und
- Fig. 4: eine vereinfachte Draufsicht gemäß Fig. 1 mit sichtbar gemachter Unterseite des Programmiergeräts.

In den Zeichnungen ist ein Programmiergerät (1) dargestellt, das über eine abgebrochen dargestellte Leitung (18) mit dem Schaltschrank bzw. der Steuerung eines mehrachsigen Manipulators, vorzugsweise eines mindestens sechsachsigen Industrieroboters, verbunden ist. Das Programmiergerät (1) beinhaltet in seinem Gehäuse (2) eine nicht näher dargestellte und beschriebene Rechen-bzw. Steuereinheit, mit der nachfolgend noch näher beschriebene Bedienelemente Steuerbefehle an den Manipulator übermittelt werden können. Mit dem Programmiergerät (1) kann der Bediener den Manipulator fernsteuern und z.B. einen Bewegungs- und/oder Funktionsablauf programmieren. Der Bediener kann sich mit dem Programmiergerät (1) vom Manipulator entfernen und das Gerät von einem sicheren Standort aus bedienen.

Das Programmiergerät (1) hat ein im wesentlichen quaderförmiges querliegendes Gehäuse mit ergonomisch abgerundeten Kanten, das drei oder mehr, vorzugsweise vier ergonomisch ausgeformte Griffbereiche (6,7,8,9) aufweist.

Der Bediener kann das Programmiergerät (1) dadurch auf unterschiedliche Weise halten und bedienen.

Die bevorzugte Haltung des Programmiergerätes (1) ist im Querformat mit den Händen an den seitlichen Griffbereichen (7,8). Die Seitenränder können zur Geräterückseite (25) hin etwas nach innen geneigt sein, so daß sich eine leicht ergonomische trapezförmige, konvergente Handhaltung ergibt.

An zwei oder mehr Gehäuserändern (25,26) befinden sich Griffleisten (6,7,8), die an die Handform angepaßt und an das Gehäuse (2) angeformt bzw. integriert sind. Sie besitzen griffgünstige Oberflächen, die z.B. aufgerauht oder mit Riefen versehen sind. In der bevorzugten Ausführungsform befinden sich die Griffleisten (6,7,8) am hinteren Gehäuserand (25) und den beiden seitlichen Gehäuserändern (26).

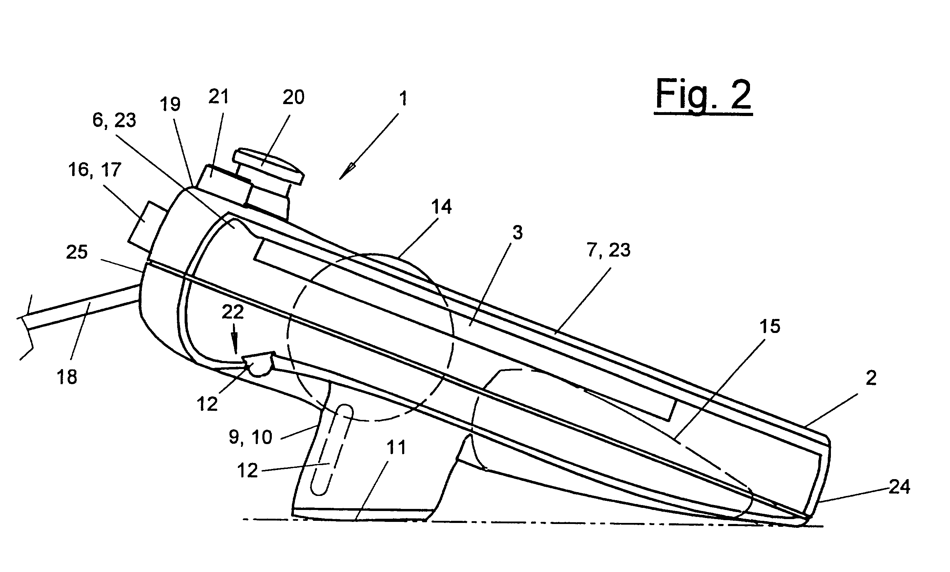

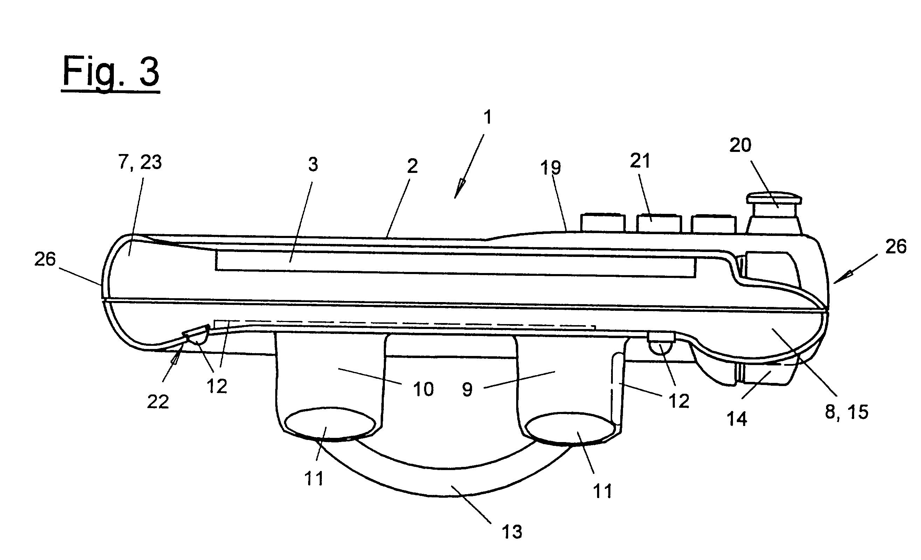

Wie aus Fig. 2 und 3 ersichtlich, bestehen die hintere und die linke Griffleiste (6,7) jeweils aus einem an der Gehäuseoberseite angeformten leistenförmigen Höcker (23) und einer an der Gehäuseunterseite befindlichen korrespondierenden Griffmulde (22). Die Höcker (23) dienen zur Stützung des Handwurzelbereichs nebst Ballen. Die Finger umgreifen die Gehäuseränder (25,26) und finden in den ebenfalls leistenförmigen Griffmulden (22) Halt.

Auf der rechten Gehäuseseite (26) ist die Griffleiste (8) etwas anders ausgebildet. Sie besitzt eine seitlich vorstehende und der Handform angepaßte Ballenauflage (15), die sich entlang des seitlichen Gehäuserands (26) erstreckt. Die Ballenauflage (15), die zugleich einen Griff bildet, verbreitert sich ausgehend vom vorderen Gehäuserand (24) zunehmend und springt dann wieder zurück. Die Ballenauflage (15) ist gegenüber der Gehäuseoberfläche in der Höhe etwas abgesenkt. An der Unterseite befindet sich ebenfalls eine längslaufende Griffmulde (22). Eine oder mehrere Griffmulden (22) können alternativ auch entfallen.

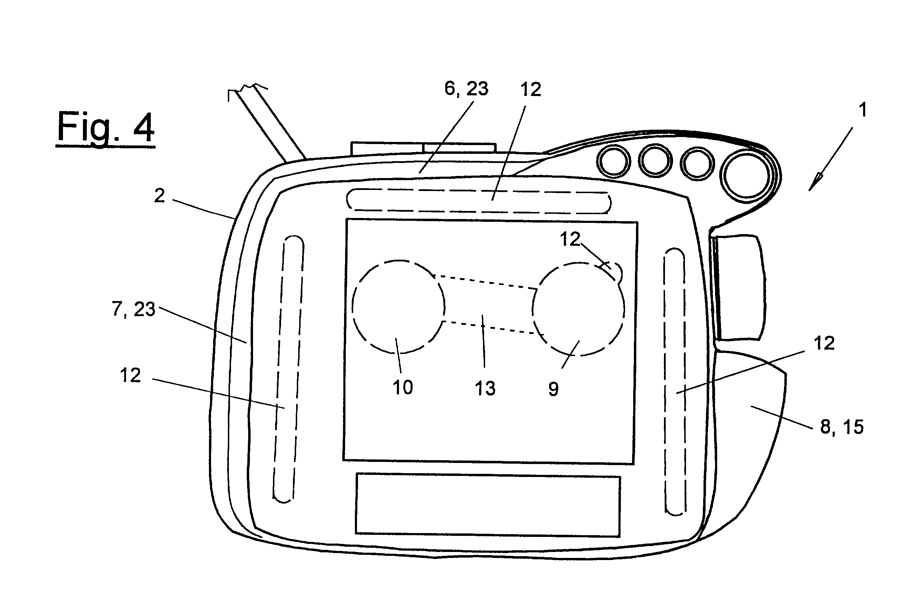

Der vierte Griffbereich (9) ist an der Gehäuseunterseite angeordnet und besteht aus einem Griffzapfen (9) (vgl. Fig. 4). Dieser steht senkrecht von der Gehäuseunterseite ab und befindet sich in der rechten Hälfte des Programmiergeräts (1). Er ist für die linke Hand vorgesehen, wobei das Programmiergerät (1) auf dem Unterarm des Bedieners abgestützt werden kann. Im Armbereich kann an der Geräteunterseite eine hautfreundliche und weiche Beschichtung angeordnet sein. Die Anordnung der Griffleiste (8) bzw. Ballenauflage (15) und des Griffzapfens (9) können für Linkshänder auch auf die andere Gehäuseseite verlegt werden, so daß bei entsprechender Umgestaltung des Gehäuses (2) das Programmiergerät (1) auch für Linkshänder angepaßt werden kann.

Mit den vorbeschriebenen Griffbereichen (6,7,8,9) kann der Bediener das Programmiergerät (1) auf mindestens drei vorgesehene Weisen halten. Zum einen kann er es mit beiden Händen an den seitlichen Griffleisten (7,8) fassen. Er kann es auch mit der linken Hand an der hinteren Griffleiste (6) halten und in der Hüfte abstützen. Die dritte Möglichkeit ist die vorerwähnte Haltung am Griffzapfen (9). Schließlich kann das Programmiergerät (1) auch in der nachfolgend beschrieben Weise auf einem Untergrund in ergonomisch günstiger Bedienlage abgestellt werden.

Auf der Oberseite des Gehäuses (2) sind die meisten Bedienelemente des Programmiergeräts (1) angeordnet. Im vorzugsweise mittleren Bereich befindet sich eine Anzeige (3), die vorzugsweise als mehrzeiliges, graphikfähiges und farbiges Display ausgebildet ist. Vorzugsweise kommen hierfür Farbbildschirme wie für tragbare Computer zum Einsatz. Darunter ist beispielsweise ein Tastaturfeld (5) angeordnet, das eine alphanumerische oder eine Schreibmaschinentastatur und ggf. weitere Bedientasten, wie Cursor-Tasten oder dgl. beinhalten kann.

Der Manipulator wird in seinen Bewegungen und/oder Funktionen maßgeblich auch durch Funktionstasten (4) gesteuert, die vorzugsweise oberhalb und zu beiden Seiten des Displays (3) angeordnet sind. Sie können auch unterhalb des Displays (3) vorhanden sein. Die Funktionstasten (4) sind vorzugsweise jeweils in ein oder zwei parallelen Reihen angeordnet, die sich in der Nähe und längs der Griffleisten (6,7,8) erstrecken. Die Funktionstasten sind dabei so angeordnet, daß sie sich in Fingergreifnähe befinden und insbesondere mit den Daumen leicht und bequem erreichbar sind. Entsprechend der Mehrfachanordnung der Griffbereiche (6,7,8) können auch die Funktionstasten (4) mehrfach vorhanden sein. Der Bediener kann dadurch die gleiche Funktion an mehreren Stellen und in verschiedenen Griffbereichen auslösen. Die Funktionstasten (4) können als menügesteuerte Softkey-Tasten ausgebildet sein und mit einer optischen Bedienerführung am Displayrand zusammenwirken.

An der Gehäuseunterseite befinden sich an einer oder mehreren Griffleisten (6,7,8) Schalttasten (12), die vorzugsweise im Bereich der Griffmulde (22) angeordnet sind. Hierbei handelt es sich beispielsweise um Zustimmungstasten und/oder Start/Stop-Tasten. Die Schalttasten (12) können, wie in Fig. 4 gezeigt, aus länglichen Schaltleisten oder aus mehreren kürzeren Schaltelementen bestehen. Am Griffzapfen (9) sind ebenfalls ein oder mehrere Schalttasten (12) mit den Fingern erreichbar angeordnet. Gegebenenfalls kann auch im Daumenbereich noch eine Taste (nicht dargestellt) sein.

Das Programmiergerät (1) weist ein mehrachsig bewegliches Steuerorgan (14) auf, dessen Bewegungen auf die translatorischen und rotatorischen Achsen des Manipulators übertragen werden. In der bevorzugten Ausführungsform ist das Steuerorgan als sechsachsiger Joystick (14) für die sechs Roboterachsen ausgebildet.

Das Steuerorgan (14) befindet sich an einem der beiden seitlichen Gehäuseränder (26) bzw. seitlichen Gehäuseflächen und kann von einer Griffleiste (8) aus bequem und ohne Umgreifen erreicht werden. Vorzugsweise sitzt das Steuerorgan (14) mit geringem Abstand hinter der Ballenauflage (15) an der rechten Gehäuseseite (26).

Das Steuerorgan (14) ist liegend angeordnet und steht seitlich vom Gehäuserand (26) ab. Es ist mit seiner Hauptachse im wesentlichen horizontal ausgerichtet. Das Steuerorgan ist als Joystick ausgebildet und besitzt im Gegensatz zum Stand der Technik eine Stummelform. Der Griff hat keinen abstehenden Stiel, sondern sitzt direkt am seitlichen Gehäuserand (26). Der Griff ist dicker als bei bekannten Joysticks und hat eine Zylinder- oder Walzenform, deren Gestalt und Größe an die Muldenform der hohlen, leicht gewölbten Hand angepaßt ist.

Der Joystick (14) kann in der 6-D-Version um die drei Raumachsen gedreht oder gekippt werden und auch um die drei Raumachsen translatorisch verschoben werden. Die Hand des Bedieners wird dabei auf der Ballenauflage (15) abgestützt, wobei die Griffwalze des Joysticks (14) mit Daumen, Zeige- und Mittelfinger ergriffen und betätigt werden kann. Über die Griffleiste (8) und die Ballenauflage (15) kann der Bediener das Gerät mit der rechten Hand halten und zugleich den Joystick bedienen. Außerdem kann er gleichzeitig die benachbarten Funktionstasten (4) mit dem Daumen erreichen und betätigen. Ein Umgreifen ist nicht erforderlich.

Das Steuerorgan (14) kann in der Bewegungsdimension und der Nutzung umschaltbar sowie evtl. programmierbar sein. Dadurch kann es z.B. bei einer 2-D-Umschaltung als Maus verwendet werden, mit der sich z.B. der Cursor auf der Anzeige (3) bewegen läßt. Bei einer 1-D-Schaltung kann das Steuerorgan (14) als programmierbarer Lauf- oder Stellregler bzw. -taste für die Einstellung eines Parameters eingesetzt werden. Dank der Griffleiste (8) bzw. Ballenauflage (15) kann das Steuerorgan (14) dabei ruhig gehalten und mit der nötigen Feinfühligkeit und Genauigkeit bewegt werden.

Vorzugsweise am rechten hinteren Gehäuserand (25) befindet sich ein Gehäuseansatz (19), der nach hinten sowie seitlich vorsteht und das Steuerorgan (14) von hinten übergreift. Auf dem Gehäuseansatz (19) befinden sich ein Notschalter (20) und ein oder mehrere Geräteschalter (21). Vorzugsweise handelt es sich hierbei um Ein/Ausschalter für den Manipulator, dessen Antriebe bzw. die Robotersteuerung. Ein Geräteschalter (21) kann auch ein Schlüsselschalter zum Einstellen der Betriebsarten der Robotersteuerung oder für andere Zwecke sein.

Neben dem Griffzapfen (9) befindet sich an der Gehäuseunterseite vorzugsweise mit seitlichem Abstand ein zweiter paralleler Zapfen (10). An der Gehäuseunterseite kann sich auch ein Haltegurt (13) befinden, mit dem das Programmiergerät (1) an der Hand zusätzlich befestigt werden kann. Wie Fig. 2 und 3 verdeutlichen, können die Zapfen (9,10) angeschrägte Fußflächen (11) aufweisen, die zur Gehäusevorderseite (24) geneigt sind. Dadurch kann das Programmiergerät (1) in der in Fig. 2 gezeigten Weise in Schräglage auf einem Tisch oder einer anderen festen Unterlage abgestellt werden.

Das Programmiergerät (1) besitzt ein oder mehrere elektrische Schnittstellen (16,17) für den Anschluß externer Kommunikationsmittel. Vorzugsweise handelt es sich hierbei um externe Ein- oder Ausgabegeräte, z.B. eine Computertastatur, einen Monitor oder dgl.. Die Schnittstellen (16,17) können auch zur Verbindung mit einer Recheneinheit, insbesondere einem tragbaren Computer, dienen. Dadurch können am Programmiergerät (1) an Ort und Stelle weitere Programmierdaten eingegeben und direkt der Robotersteuerung übermittelt werden. Der Bediener muß dazu nicht den Schaltschrank aufsuchen, sondern kann alle Führungs- und Programmieraufgaben an Ort und Stelle und in einem Zug erledigen.

Die Schnittstellen (16,17) können elektrische Steckkontakte für Kabelstecker aufweisen. Sie können zusätzlich oder alternativ versenkte Aufnahmen mit elektrischen, optischen oder sonstigen Kontakten für Schnittstellenkarten aufweisen. Hierbei kann es sich z.B. um sogenannte PCMCIA-Anschlüsse handeln. An die Schnittstellen (16,17) können auch Telekommunikationsmittel, z.B. Funk- oder Infrarotsender, Netzwerkkarten, Modems oder dgl. zur Kommunikation mit dem Schaltschrank, der Robotersteuerung, einem Netzwerk, einer übergeordneten Fertigungssteuerung oder dgl. angeschlossen werden. Auf die Leitung (18) kann gegebenenfalls verzichtet werden.

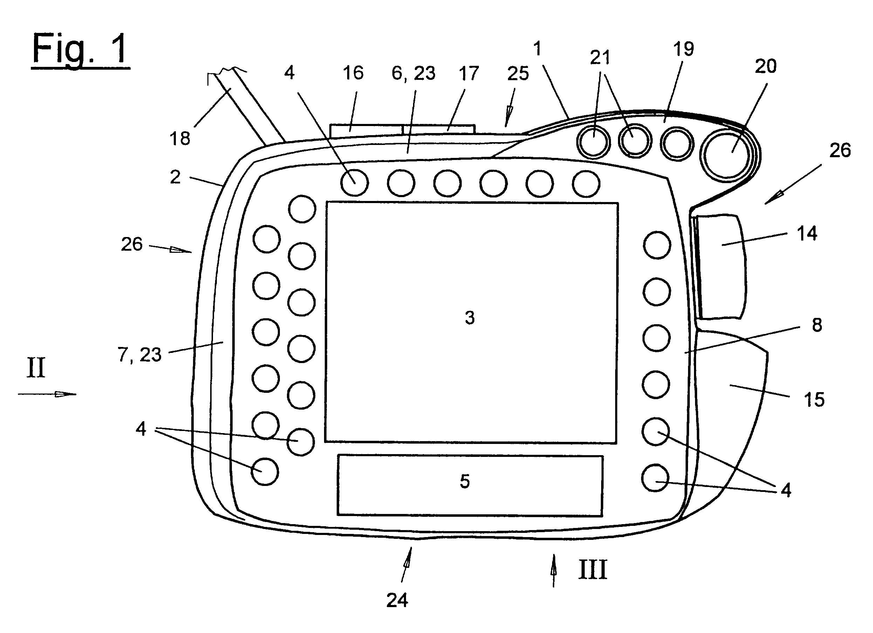

Die Schnittstellen (16,17) können an beliebiger und geeigneter Stelle des Gehäuses (2) angeordnet sein. In der bevorzugten Ausführungsform befinden sie sich an der Unterseite des Programmiergeräts (1) und sind versenkt angeordnet. Sie können aber auch am vorderen und/oder hinteren Gehäuserand (24,25) liegen. In Fig. 1 sind sie der Übersichtlichkeit wegen hinten und vorspringend dargestellt. Die Schnittstellen (16,17) können sich unter dem Gehäuseansatz (19) befinden. Es ist auch möglich, sie im Griffbereich (6,7,8,9) zu plazieren. Die Schnittstellen (16,17) können ggf. mehrfach vorhanden und über verschiedene Stellen am Gehäuse (2) verteilt sein.

Die Leitung (18) befindet sich z.B. am vorderen oder hinteren Gehäuserand (24,25) und im Bereich der linken Ecke. Sie liegt dadurch außerhalb der Griffbereiche (6,7,8) und stört in keiner der möglichen Griffstellungen.

Abwandlungen der gezeigten Ausführungsformen sind in verschiedener Weise möglich. So können weniger als die vier beschriebenen Griffbereiche (6,7,8,9) vorhanden sein. Es müssen auch nicht an allen Griffbereichen Funktionstasten (4) oder Schalttasten (12) in der beschriebenen Weise angeordnet sein. Auf den Joystick (14) kann in einer vereinfachten Ausführungsform genauso wie auf die Schnittstellen (16,17) verzichtet werden. Abwandlungen sind auch hinsichtlich der Anzeige (3) und des Tastaturfelds (5) möglich, die einfacher ausgebildet sein können oder ggf. sogar wegfallen. Anstelle der leistenförmigen Höcker (23) und Griffmulden (22) können stärker ausgeformte Griffelemente vorhanden sein. Das Programmiergerät (1) kann einen Tragegurt zum Anhängen an Schulter oder Hals aufweisen.

Das Programmiergerät (1) besteht vorzugsweise aus sehr leichtgewichtigen Komponenten, um das Gesamtgewicht und die Belastung des Bedieners möglichst gering zu halten. Die vorbeschriebenen Funktionsteile bestehen größtenteils aus Kunststoff oder anderen leichten Materialien.

### BEZUGSZEICHENLISTE

- 1: Programmiergerät
- 2: Gehäuse
- 3: Anzeige, Display
- 4: Funktionstaste
- 5: Tastaturfeld
- 6: Griffbereich, Griffleiste
- 7: Griffbereich, Griffleiste
- 8: Griffbereich, Griffleiste
- 9: Griffbereich, Zapfen, Griffzapfen
- 10: Zapfen, Stützfuß
- 11: Fußfläche
- 12: Schalttaste
- 13: Haltegurt
- 14: Steuerorgan, Joystick
- 15: Ballenauflage
- 16: Schnittstelle, Tastatur
- 17: Schnittstelle, PC
- 18: Leitung
- 19: Gehäuseansatz
- 20: Notschalter
- 21: Geräteschalter
- 22: Griffmulde
- 23: Höcker
- 24: Gehäusevorderseite, vorderer Gehäuserand
- 25: Gehäuserückseite, hinterer Gehäuserand
- 26: Gehäuseseite, seitlicher Gehäuserand

## Patentansprüche

1. Programmiergerät für Manipulatoren, insbesondere mehrachsige Industrieroboter, bestehend aus einem Gehäuse (2), einer Anzeige (3), mehreren Schaltern (12,20,21) und/oder Funktionstasten (4) und ergonomisch ausgeformten Griffbereichen (6,7,8,9) zum beidhändigen Halten und Bedienen des Programmiergeräts (1), wobei in Fingergreifnähe jedes Griffbereichs (6,7,8,9) Funktionstasten (4) und/oder Schalter (12,20,21) angeordnet sind, dadurch **gekennzeichnet**, daß das Gehäuse (2) drei oder mehr solcher Griffbereiche (6,7,8,9) an verschiedenen Stellen für unterschiedliche Handhaltungen aufweist.

2. Programmiergerät nach Anspruch 1, dadurch **gekennzeichnet**, daß an mindestens zwei Gehäuserändern (25,26) Griffleisten (6,7,8) angeformt sind, wobei zumindest ein Teil der Funktionstasten (4) in Fingergreifnähe entlang der Griffleisten (6,7,8) angeordnet sind.

3. Programmiergerät nach Anspruch 2, dadurch **gekennzeichnet**, daß die Griffleisten (6,7,8) am hinteren und den beiden seitlichen Gehäuserändern (25,26) angeordnet sind.

4. Programmiergerät nach Anspruch 2 oder 3, dadurch **gekennzeichnet**, daß an der Gehäuseunterseite zumindest bei einem Teil der Griffleisten (6,7,8) in Fingergreifnähe ein oder mehrere Schalttasten (12) angeordnet sind.

5. Programmiergerät nach einem der Ansprüche 1 bis 4, dadurch **gekennzeichnet,** daß mindestens eine Griffleiste (8) eine vorstehende Ballenauflage (15) aufweist.

6. Programmiergerät nach einem der Ansprüche 1 bis 5, dadurch **gekennzeichnet**, daß mindestens eine Griffleiste (8) an der Gehäuseoberseite einen Höcker (23) zur Ballen- und Daumenabstützung und an der Gehäuseunterseite eine Griffmulde (22) für die anderen Finger aufweist.

7. Programmiergerät nach einem der Ansprüche 1 bis 6, dadurch **gekennzeichnet**, daß die Funktionstasten (4) im Daumenbereich und die Schalttasten (12) im Griffbereich der anderen Finger liegen.

8. Programmiergerät nach einem der Ansprüche 1 bis 7, dadurch **gekennzeichnet**, daß die Funktionstasten (4) für die gleiche Funktion mehrfach vorhanden sind.

9. Programmiergerät nach einem der Ansprüche 1 bis 8, dadurch **gekennzeichnet**, daß an mindestens einem seitlichen Gehäuserand (26) ein mehrachsig bewegliches Steuerorgan (14) angeordnet ist.

10. Programmiergerät nach Anspruch 9, dadurch **gekennzeichnet**, daß das Steuerorgan (14) als sechsachsig beweglicher Joystick ausgebildet ist.

11. Programmiergerät nach Anspruch 9 oder 10, dadurch **gekennzeichnet**, daß das Steuerorgan (14) auf eine andere Achsenzahl umschaltbar und/oder programierbar ist.

12. Programmiergerät nach Anspruch 9, 10 oder 11, dadurch **gekennzeichnet,** daß das Steuerorgan (14) stummelförmig ausgebildet ist, wobei sein Griff nahe am Gehäuserand (26) angeordnet ist.

13. Programmiergerät nach einem der Ansprüche 9 bis 12, dadurch **gekennzeichnet**, daß das Steuerorgan (14) einen walzenförmigen dicken Griff aufweist.

14. Programmiergerät nach einem der Ansprüche 9 bis 13, dadurch **gekennzeichnet,** daß das Steuerorgan (14) seitlich vorragt und an einer Griffleiste (8) angeordnet ist.

15. Programmiergerät nach Anspruch 14, dadurch **gekennzeichnet**, daß das Steuerorgan (14) mit geringem Abstand hinter der Ballenauflage (15) angeordnet ist.

16. Programmiergerät nach einem der Ansprüche 1 bis 15, dadurch **gekennzeichnet**, daß am Gehäuse (2) ein Ansatz (19) mit einem Notschalter (20) und mindestens einem Geräteschalter (21) angeordnet ist.

17. Programmiergerät nach Anspruch 16, dadurch **gekennzeichnet**, daß der Gehäuseansatz (19) am hinteren Gehäuserand (25) angeordnet ist und das Steuerorgan (14) übergreift.

18. Programmiergerät nach einem der Ansprüche 1 bis 17, dadurch **gekennzeichnet**, daß an der Gehäuseunterseite zwei abstehende Zapfen (9,10) mit Abstand nebeneinander angeordnet sind, von denen mindestens einer als Griff ausgebildet ist.

19. Programmiergerät nach Anspruch 18, dadurch **gekennzeichnet**, daß der Griffzapfen (9) eine oder mehrere Schalttasten (12) und einen Haltegurt (13) aufweist.

20. Programmiergerät nach Anspruch 18 oder 19, dadurch **gekennzeichnet**, daß die Zapfen (9,10) eine zur Gehäusevorderseite (24) abgeschrägte Fußfläche (11) aufweisen.

21. Programmiergerät nach einem der Ansprüche 1 bis 20, dadurch **gekennzeichnet,** daß am Gehäuse (2) ein oder mehrere Schnittstellen (16,17) zur Verbindung mit externen Kommunikationsmitteln, insbesondere externen Ein- oder Ausgabegeräten und/oder externen Recheneinheiten angeordnet sind.

22. Programmiergerät nach Anspruch 21, dadurch **gekennzeichnet**, daß die Schnittstellen (16,17) am Gehäuse (2) versenkt angeordnet sind.

23. Programmiergerät nach Anspruch 21 oder 22, dadurch **gekennzeichnet,** daß die Schnittstellen (16,17) elektrische Steckkontakte für Kabelstecker aufweisen.

24. Programmiergerät nach Anspruch 21, 22 oder 23, dadurch **gekennzeichnet**, daß die Schnittstellen (16,17) Aufnahmen mit Kontakten für Schnittstellenkarten aufweisen.

25. Programmiergerät nach einem der Ansprüche 21 bis 24, dadurch **gekennzeichnet**, daß an den Schnittstellen (16,17) Kommunikationsmittel für einen drahtlosen Datenaustausch angeschlossen sind.

26. Programmiergerät nach einem der Ansprüche 1 bis 25, dadurch **gekennzeichnet**, daß die Anzeige (3) als mehrzeiliges graphikfähiges Display ausgebildet ist.

27. Programmiergerät nach einem der Ansprüche 1 bis 26, dadurch **gekennzeichnet**, daß unterhalb der Anzeige (3) ein Tastaturfeld (5) angeordnet ist.

## Claims

1. Programming device for manipulators, particularly multiaxial industrial robots, comprising a housing (2), a display (3), several switches (10, 20, 21) and/or function keys (4) and ergonomically shaped grip areas (6, 7, 8, 9) for the holding and operating with two hands of the programming device (1), function keys (4) and/or switches (12, 20, 21) being located within reach of the fingers of each grip area (6, 7, 8, 9), characterized in that the housing (2) has two or more such grip areas (6, 7, 8, 9) at different locations for different manipulations.

2. Programming device according to claim 1, characterized in that on at least two housing edges (25, 26) are formed grip strips (6, 7, 8), at least some of the function keys (4) being located within finger reach along the grip strips (6, 7, 8).

3. Programming device according to claim 2, characterized in that the grip strips (6, 7, 8) are positioned on the rear and the two lateral housing edges (25, 26).

4. Programming device according to claim 2 or 3, characterized in that, at least for some of the grip strips (6, 7, 8), one or more switching keys (12) are positioned within finger reach on the underside of the housing.

5. Programming device according to one of the claims 1 to 4, characterized in that at least one grip strip (8) has a projecting thumb ball pad (15).

6. Programming device according to one of the claims 1 to 5, characterized in that at least one grip strip (8) has on the top of the housing a hump (23) for supporting the ball of the thumb and the thumb and on the underside of the housing a recessed grip (22) for the other fingers.

7. Programming device according to one of the claims 1 to 6, characterized in that the function keys (4) are located in the range of the thumb and the switching keys (12) in the grip area of the other fingers.

8. Programming device according to one of the claims 1 to 7, characterized in that there are several function keys (4) for the same function.

9. Programming device according to one of the claims 1 to 8, characterized in that a multiaxially movable control member (14) is positioned on at least one lateral housing edge (26).

10. Programming device according to claim 9, characterized in that the control member (14) is constructed as a joystick movable about six axes.

11. Programming device according to claim 9 or 10, characterized in that the control member (14) can be switched and/or programmed to a different number of axes.

12. Programming device according to claim 9, 10 or 11, characterized in that the control member (14) has a stub-like construction, a grip being positioned close to the housing edge (26).

13. Programming device according to one of the claims 9 to 12, characterized in that the control member (14) has a roller-shaped, thick grip.

14. Programming device according to one of the claims 9 to 13, characterized in that the control member (14) projects laterally and is positioned on a grip strip (8).

15. Programming device according to claim 14, characterized in that the control member (14) is positioned a limited distance behind the thumb ball pad (15).

16. Programming device according to one of the claims 1 to 15, characterized in that on the housing (2) is located a shoulder (19) with an emergency switch (20) and at least one device switch (21).

17. Programming device according to claim 16, characterized in that the housing shoulder (19) is located on the rear housing edge (25) and engages over the control member (14).

18. Programming device according to one of the claims 1 to 17, characterized in that on the underside of the housing are spacedly arranged in juxtaposed manner two projecting pins (9, 10), whereof at least one is constructed as a grip.

19. Programming device according to claim 18, characterized in that the grip pin (9) has one or more switching keys (12) and a holding strap (13).

20. Programming device according to claim 18 or 19, characterized in that the pins (9, 10) have a base surface (11) bevelled towards the front (24) of the housing.

21. Programming device according to one of the claims 1 to 20, characterized in that on the housing (2) are provided one or more interfaces (16, 17) for connection to external communications means, particularly external input or output devices and/or external computing units.

22. Programming device according to claim 21, characterized in that the interfaces (16, 17) are located in recessed manner on the housing (2).

23. Programming device according to claim 21 or 22, characterized in that the interfaces (16, 17) have electric plug contacts for the cable plugs.

24. Programming device according to claim 21, 22 or 23, characterized in that the interfaces (16, 17) have recesses with contacts for interface cards.

25. Programming device according to one of the claims 21 to 24, characterized in that communications means for a wireless data exchange are connected to the interfaces (16, 17).

26. Programming device according to one of the claims 1 to 25, characterized in that the display (3) is constructed as a multiline display with graphics capabilities.

27. Programming device according to one of the claims 1 to 26, characterized in that a keyboard (5) is located below the display (3).

## Revendications

1. Appareil de programmation pour des manipulateurs, en particulier pour des robots industriels multiaxes, comprenant un boîtier (2), un afficheur (3), plusieurs commutateurs (12,20,21) et/ou touches de fonction (4) et des zones de préhension (6,7,8,9 ) de conformation ergonomique pour pouvoir maintenir l'appareil de programmation (1) et s'en servir des deux mains, des touches de fonction (4) et/ou des commutateurs (12,20,21) étant disposés à portée de doigt de chaque zone de préhension (6,7,8,9), caractérisé en ce que le boîtier (2) présente trois zones de préhension (6,7,8,9) de ce type ou davantage à différents endroits pour des prises en main différentes.

2. Appareil de programmation selon la revendication 1, caractérisé en ce que des rebords de préhension (6,7,8) sont conformés sur deux bords au moins du boîtier (25,26), une partie au moins des touches de fonction (4) étant disposées le long des rebords de préhension (6,7,8) à portée de doigt.

3. Appareil de programmation selon la revendication 2, caractérisé en ce que les rebords de préhension (6,7,8) sont disposés sur le bord arrière et les deux bords latéraux (25,26) du boîtier.

4. Appareil de programmation selon la revendication 2 ou 3, caractérisé en ce qu'une ou plusieurs touches de commutation (12) sont disposées a portée de doigt en sous-face du boîtier au moins près d'une partie des rebords de préhension (6,7,8).

5. Appareil de programmation selon l'une quelconque des revendications 1 à 4, caractérisé en ce qu'au moins un rebord de préhension (8) présente un appui de paume en saillie.

6. Appareil de programmation selon l'une quelconque des revendications 1 à 5, caractérisé en ce qu'au moins un rebord de préhension (8) présente à la face supérieure du boîtier une saillie (23) servant d'appui à la paume et au pouce et un creux de préhension (22) pour les autres doigts en sous-face du boîtier.

7. Appareil de programmation selon l'une quelconque des revendications 1 à 6, caractérisé en ce que les touches de fonction (4) sont situées dans la zone du pouce et les touches de commutation (12) à portée des autres doigts.

8. Appareil de programmation selon l'une quelconque des revendications 1 à 7, caractérisé en ce que les touches de fonction (4) dédiées à la même fonction sont multiples.

9. Appareil de programmation selon l'une quelconque des revendications 1 à 8, caractérisé en ce qu'un organe de commande (14) multiaxial mobile est disposé sur au moins un bord (26) latéral du boîtier.

10. Appareil de programmation selon la revendication 9, caractérisé en ce que l'organe de commande (14) est conformé en joystick mobile à six axes.

11. Appareil de programmation selon la revendication 9 ou 10, caractérisé en ce que l'organe de commande (14) peut être commuté sur et/ou programmé pour un autre nombre d'axes.

12. Appareil de programmation selon la revendication 9, 10 ou 11, caractérisé en ce que l'organe de commande (14) présente une conformation en tronçon, sa poignée étant disposée près du bord (26) du boîtier.

13. Appareil de programmation selon l'une quelconque des revendications 9 à 12, caractérisé en ce que l'organe de commande (14) présente une poignée cylindrique épaisse.

14. Appareil de programmation selon l'une quelconque des revendications 9 à 13, caractérisé en ce que l'organe de commande fait saillie latéralement et est disposé sur un rebord de préhension (8).

15. Appareil de programmation selon la revendication 14, caractérisé en ce que l'organe de commande (14) est disposé à faible distance derrière le support de paume (15).

16. Appareil de programmation selon l'une quelconque des revendications 1 à 15, caractérisé en ce qu'un épaulement (19) comportant un commutateur d'urgence (20) et au moins un interrupteur général (21) est disposé sur le boîtier (2).

17. Appareil de programmation selon la revendication 16, caractérisé en ce que l'épaulement de boîtier (19) est disposé sur le bord (25) arrière du boîtier et dépasse au-dessus de l'organe de commande (14).

18. Appareil de programmation selon l'une quelconque des revendications 1 à 17, caractérisé en ce que deux plots (9,10) en saillie sont disposés adjacents à distance l'un de l'autre sur la face inférieure du boîtier, dont l'un au moins présente une conformation en poignée.

19. Appareil de programmation selon la revendication 18, caractérisé en ce que le plot de préhension (9) présente une ou plusieurs touches de commutation (12) et une sangle de maintien (13).

20. Appareil de programmation selon la revendication 18 ou 19, caractérisé en ce que les plots (9,10) présentent une embase (11) chanfreinée en direction de la face avant (24) du boîtier.

21. Appareil de programmation selon l'une quelconque des revendications 1 à 20, caractérisé en ce qu'une ou plusieurs interfaces (16,17) sont disposées sur le boîtier (2) pour la liaison avec des moyens de communication externes, en particulier avec des périphériques d'entrée ou de sortie externes et/ou des unités de calcul externes.

22. Appareil de programmation selon la revendication 21, caractérisé en ce que les interfaces (16,17) sont disposées encastrées dans le boîtier (2).

23. Appareil de programmation selon la revendication 21 ou 22, caractérisé en ce que les interfaces (16,17) présentent des contacts enfichables pour des fiches de câble.

24. Appareil de programmation selon la revendication 21, 22 ou 23, caractérisé en ce que les interfaces (16,17) présentent des logements de réception à contacts pour des cartes d'interface.

25. Appareil de programmation selon l'une quelconque des revendications 21 à 24, caractérisé en ce que des moyens de communication pour un échange de données sans fil sont reliés aux interfaces (16,17).

26. Appareil de programmation selon l'une quelconque des revendications 1 à 25, caractérisé en ce que l'afficheur (3) consiste en un écran graphique multiligne.

27. Appareil de programmation selon l'une quelconque des revendications 1 à 25, caractérisé en ce qu'un panneau de clavier (5) est disposé en-dessous de l'afficheur (3).
